# EUROPÄISCHE PATENTSCHRIFT

(11) **EP 1 423 618 B1**
(45) Veröffentlichungstag und Bekanntmachung des Hinweises auf die Patenterteilung: **08.06.2005**
(21) Anmeldenummer: 02797905.3
(22) Anmeldetag: 09.09.2002
(51) Int. Cl.: F16B 13/14, F16B 13/02

(54) **KUNSTSTOFF-INJEKTIONSDÜBELHÜLSE**
PLASTIC INJECTION PLUG SHELL
DOUILLE DE CHEVILLE A INJECTION EN MATIERE PLASTIQUE

(30) Priorität: 07.09.2001 DE 10143866
(43) Veröffentlichungstag der Anmeldung: 02.06.2004
(73) Patentinhaber: Ritter GmbH, 86830 Schwabmünchen (DE)
(72) Erfinder: RITTER, Frank, Georg, 87745 Weiler (Eppishausen) (DE); BRENDEL, Gerald, 86836 Untermeitingen (DE)
(74) Vertreter: Gallo, Wolfgang, Dipl.-Ing. (FH)
(86) Internationale Anmeldenummer: PCT/DE2002/003330
(87) Internationale Veröffentlichungsnummer: WO 2003/023237

(56) Entgegenhaltungen:
- EP-A- 0 109 026
- EP-A- 0 529 229
- EP-A- 0 881 399
- US-A- 4 425 065

## Beschreibung

Die Erfindung betrifft eine Injektionsdübelhülse aus Kunststoff.

Injektionsdübel dienen zur Verankerung von Bauteilen oder Gegenständen an Wänden aus Hohlblock- bzw. Hohlkammersteinen oder Beton oder auch sonstige Mauerwerk, wobei es darauf ankommt, eine gute, nicht nur reibschlüssige, sondern insbesondere formschlüssige und/oder stoffschlüssige Verbindung herzustellen.

Dazu bestehen Injektionsdübel aus einer Injektionsdübelhülse, wie sie in verschiedenen Ausführungsformen bekannt ist, weiter aus nach dem Einsetzen der Dübelhülse in das Dübelloch eingepresstem Injektionsmörtel und einem sodann in die Dübelhülse eingesteckten Ankerbolzen, der sich mit seiner profilierten, üblicherweise mit Gewinde versehenen Außenfläche mit dem Injektionsmörtel verzahnt.

Um die formschlüssige Verbindung in Lochsteinen bzw. die stoffschlüssige Verbindung des Injektionsmörtels mit der Bohrlochwand zu ermöglichen, sind bereits verschiedene Formen von Injektionsdübelhülsen vorgeschlagen worden und in Gebrauch. Eine gebräuchliche Ausführungsform solcher Injektionsdübelhülsen sind sogenannte Siebhülsen, bei denen die Hülsenmantelwand aus einem siebartigen Gitter besteht, siehe z.B. das Dokument EP 0 881 399. Solche Siebhülsen gibt es aus Metall sowie aus Kunststoff. Siebhülsen aus Metall bzw. aus Drahtgeflecht bzw. mit Metalldrahtgewebe verstärkte Kunststoffsiebhülsen sind teuer und aufwendig in der Herstellung. Nur aus Kunststoff hergestellte Siebhülsen sind zwar in Kunststoffspritzgusstechnik weitaus günstiger zu fertigen, und auch hinsichtlich der Formgebung erlauben sie größeren Gestaltungsspielraum, zum Beispiel mit widerhakenartig nach außen ragenden elastischen Laschen, aber sie haben den Nachteil, dass die für vielen Anwendungsbereiche notwendige bautechnische Zulassung nicht erhältlich ist, weil mit solchen Siebhülsen die geforderten Auszugswiderstandswerte kaum zu erreichen sind und solche Siebhülsen aus Kunststoff auch den Reibschlussanforderungen nicht gerecht werden können.

Was die formschlüssige Verankerung in Lochsteinmauerwerk betrifft, haben herkömmliche Siebhülsen, und zwar sowohl aus Kunststoff wie auch aus Metall oder aus Kunststoff-Metall-Verbundkonstruktionen, den Nachteil, dass der Austritt des Injektionsmörtels durch die Sieböffnungen der Hülse in die Hohlkammern des Mauerwerks in einer nicht zuverlässig beherrschbaren Weise erfolgt, so dass nicht sicher ist, ob der nach außen ausgetretene Mörtel wirklich satt hinter durchbohrtes Mauermaterial greift oder nur irgendwo im Verlauf einer Hohlkammer aus der Siebhülse austritt.

Eine weiter bekannte Ausführungsform einer Injektionsdübelhülse hat auf einem Kunststofftraggerüst einen elastischen Strumpf als Hülsenmantel. Hier tritt der Injektionsmörtel nicht aus der Hülse aus, sondern dient nur den Strumpf im Bereich der Hohlkammern im Mauerwerk radial auf und erzeugt somit eine recht zuverlässige Formschlußverbindung, aber wegen des praktisch nicht erfolgenden Austritts des Injektionsmörtels aus dem Hülsenmantel ist das Herstellen einer Stoffschlussverbindung mit der Bohrungswand nicht möglich, so dass solche Injektionsdübelhülsen für Verankerungen in Beton kaum geeignet sind, und auch eine Reibschlussverbindung ist damit nicht herstellbar.

Der Erfindung liegt die Aufgabe zugrunde, eine Injektionsdübelhülse aus Kunststoff zu schaffen, die nicht nur in einfacher Weise und damit kostengünstig im Kunststoffspritzgußverfahren herstellbar ist, sondern auch im Hinblick auf die Verankerungseigenschaften in Beton, in Lochsteinmauerwerk und sonstigem Mauerwerk hervorragende Ergebnisse bringt, und zwar sowohl im Hinblick auf Form- und Stoffschlussverhalten, sondern auch im Hinblick auf das Reibschlussverhalten der Siebhülse.

Diese Aufgabe wird gemäß der Erfindung durch die im Anspruch 1 angegebene Injektionsdübelhülse gelöst.

Die erfindungsgemäße Injektionsdübelhülse hat als wesentliches Konstruktionsmerkmal in ihrem Mantelflächenbereich eine Anzahl eingeformter Laschen, die jeweils an ihrem in Einsteckrichtung der Dübelhülse vorderen Endbereich mit dem Hülsenkörper verbunden sind und jeweils eine radial einwärts in den Dübelhülsenhohlraum vorspringende, achsparallel verlaufende Rippe aufweisen, wobei die Rippe am vorderen und hinteren Ende jeweils mit einer Abschrägung oder dergleichen versehen ist.

Aus dieser Konstruktion ergeben sich folgende vorteilhafte Wirkungen:

Die erfindungsgemäße Dübelhülse kann in einem Stück im Spritzgussverfahren hergestellt werden, wobei die radial einwärts vorspringenden Rippen der Laschen durch entsprechende radiale Vertiefungen in dem den Dübelhülsenhohlraum erzeugenden, etwa zylindrischen Formkern gebildet sind. Zum Entformen der gespritzten Dübelhülse wird diese axial vom Formkern heruntergeschoben, und wegen der in Einsteckrichtung der Dübelhülse im späteren Gebrauch gesehen vorderen Abschrägung der Rippe wird die betreffende Lasche vom Kern automatisch um ihr vorderes Verbindungsende herum radial auswärts geklappt, so dass auf diese Weise die Entformung der Dübelhülse problemlos möglich ist. Gleichzeitig wird auf diese Weise sicher gestellt, dass die im Hülsenkörper angeformten Laschen nicht "hängen" bleiben, sondern in eine auswärts ausgeschwenkte Funktionsstellung gebracht werden, wo sie bei der später in ein Dübelloch eingesteckten Dübelhülse widerhakenartig wirken.

Wird im späteren Gebrauch die Dübelhülse in ein Dübelloch eingesteckt, werden dadurch freilich die Laschen wieder einwärts geklappt. Sie werden dort, wo sich im Mauerwerk Hohlkammern von Lochsteinen oder sonstige Hohlräume befinden, wieder etwas auffedern bzw. beim Einpressen des Injektionsmörtels nach außen aufgedrückt werden. Weil die Laschen, wie gesagt, an ihren vorderen Enden mit dem Hülsenkörper verbunden und somit angelenkt sind (die dünnwandige Verbindung wirkt als elastisches Gelenk) weisen die radial ausgeklappten Laschen schräg nach hinten (bezogen auf die Einsteckrichtung der Dübelhülse) und bilden somit eine schräg nach hinten weisende Austrittsdüsenöffnung für den Injektionsmörtel, der somit gezielt nach rückwärts in formschlüssige Anlage mit den Hohlkammerwänden von Hohlblocksteinen fließt. Laschen, die auf diese Weise nicht oder nicht vollständig geöffnet werden, werden spätestens beim Einstecken des Ankerbolzens geöffnet, denn dabei wirkt nun die rückwärtige Abschrägung jeder Rippe mit dem vorderen Ende des eingesteckten Ankerbolzens zusammen, so dass die Laschen durch den eingeschobenen Ankerbolzen aufgedrückt werden. Dort, wo Laschen nicht nach außen ausweichen und aufgebogen werden können, weil sie sich in einem massiven Bereich des durchbohrten Mauerwerks befinden und sich an der Dübellochwand abstützen, wird die entsprechende Rippe durch den eingedrückten bzw. eingeklopften oder eingeschlagenen Ankerbolzen gequetscht und erzeugt damit eine straffe radiale Verspannung zwischen Ankerbolzen und Dübellochwand, so dass dort ein satter Reibschluß entsteht. Auf diese Weise ergibt sich noch der weitere Vorteil, dass der Ankerbolzen in der erfindungsgemäßen Dübelhülse durch die radial einwärts ragenden Rippen an den Laschen über im wesentlichen die ganze Länge der Dübelhülse zentriert wird, was bei herkömmlichen Injektionsdübelhülsen durchgängig nicht der Fall ist. Denn bei Injektionsdübeln muß funktionsnotwendig zwischen dem Mantel der Dübelhülse und dem Ankerbolzen etwas Spielraum zur Aufnahme des Injektionsmörtels verbleiben, da sonst eine Verzahnung zwischen Ankerbolzen und Injektionsmörtel nicht möglich wäre.

Damit erfüllt die erfindungsgemäße Injektionsdübelhülse sämtliche oben aufgezeigten Kriterien der Aufgabestellung.

Ein Ausführungsbeispiel der Erfindung wird nachstehend unter Bezugnahme auf die anliegenden Zeichnungen mehr im einzelnen beschrieben. In den Zeichnungen zeigt:
- Fig. 1: eine perspektivische Ansicht einer Dübelhülse nach der Erfindung,
- Fig. 2: eine Seitenansicht der Dübelhülse nach Figur 1,

- Fig. 3: einen Axialschnitt durch die Dübelhülse nach den Figuren 1 und 2,
- Fig. 4: eine Stirnansicht der Dübelhülse in Richtung des Pfeils IV in den Figuren 2 und 3, wobei in Figur 4 die Schnittebene des Axialschnitts nach Figur 3 durch die Linie III-III angegeben ist,
- Fig. 5: in vergrößerter Darstellung die Einzelheit V in Figur 3, und
- die Figuren 6 - 8: jeweils im Axialhalbschnitt eine in ein Dübelloch eingesetzte Dübelhülse nach der Erfindung nach Einpressen des Injektionsmörtels in drei verschiedenen Phasen des Einsetzens eines Ankerbolzens.

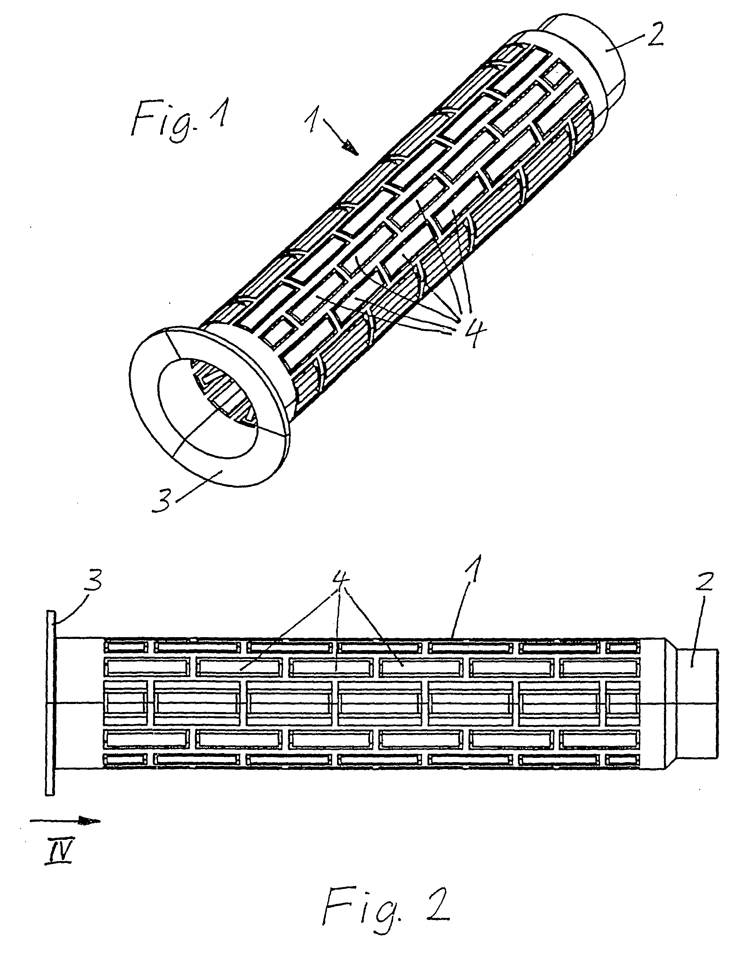

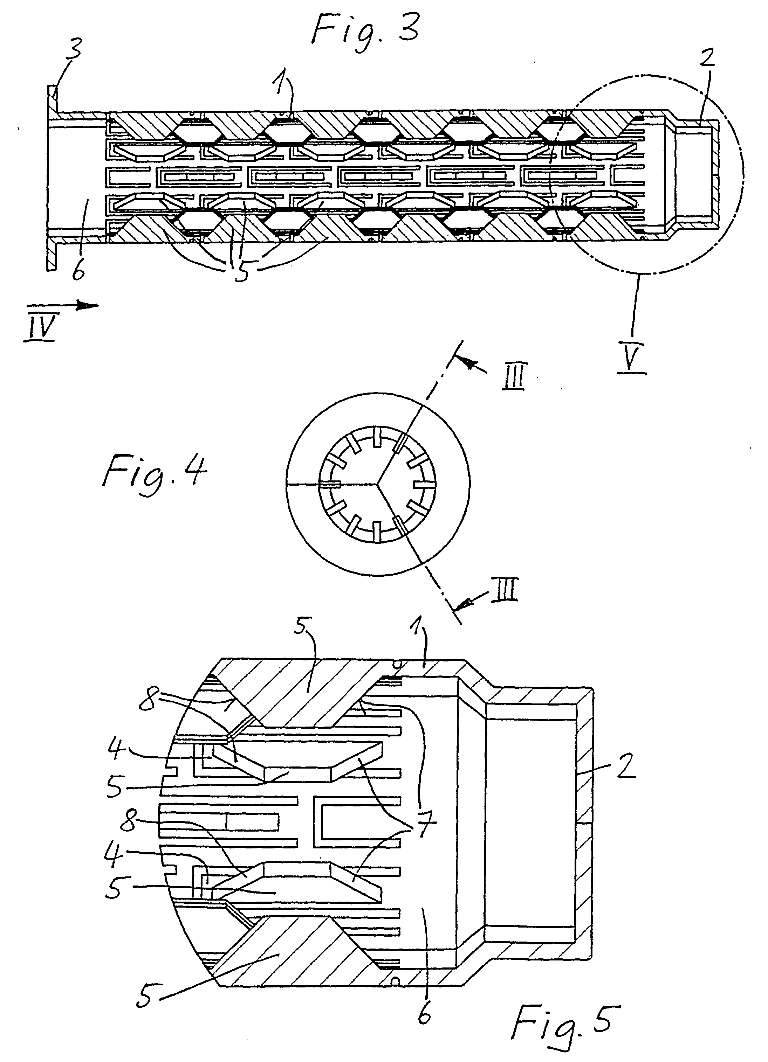

Die Figuren 1 bis 5 zeigen eine erfindungsgemäße Dübelhülse in verschiedenen Ansichten. Die Dübelhülse besteht aus einem Hülsenkörper 1 mit einem im wesentlichen geschlossenen vorderen Ende 2 und einem am hinteren offenen Ende gebildeten Radialflansch 3, der als Anschlag beim Einsetzen der Dübelhülse in ein Dübelloch dient. Die Hülsenwand des Hülsenkörpers 1 ist mit einer Anzahl von am Hülsenumfang und entlang der Hülsenlänge verteilten Laschen 4 ausgebildet, die radial auswärts ausbiegbare Hülsenwandelemente bilden und jeweils mit ihrem vorderen, das heißt dem geschlossenen Ende 2 des Hülsenkörpers zugewandten Ende mit dem übrigen Hülsenkörper verbunden sind, indem sie dort einstückig mit diesem verbunden sind. Entlang ihres übrigen Umfangs ist die Lasche vom übrigen Hülsenkörper getrennt. Jede Lasche bildet also gewissermaßen den Deckel einer in der Hülsenwand gebildeten Öffnung und gibt, wenn die Lasche radial auswärts um ihre vordere Verbindungsstelle mit der übrigen Hülsenwand ausgelenkt wird, diese Öffnung frei.

Des weiteren ist jede Lasche 4 innenseitig mit einer Rippe 5 versehen, die radial einwärts in den Hohlraum 6 der Dübelhülse vorspringt. Die Rippe 5 hat an ihrem vorderen, das heißt dem geschlossenen Ende 2 der Dübelhülse zugewandten Ende wie auch an ihrem hinteren, das heißt dem offenen Ende der Dübelhülse mit dem Flansch 3 zugewandten Ende eine Abschrägung 7 bzw. 8 oder eine entsprechende, als Keilfläche bzw. Rampe wirkende Gestaltung.

Die vordere Abschrägung 7 dient der Entformbarkeit der Dübelhülse aus einem Kunststoffspritzgusswerkzeug, bei welchem in dem den Hohlraum 6 der Dübelhülse formenden Formkern Axialnuten mit den Rippen 5 entsprechender Negativform eingearbeitet sind. Beim Herausziehen des Kerns bzw. Wegschieben der gespritzten Dübelhülse über den Kern bewirken die miteinander zusammenwirkenden Schrägflächen an den vorderen Enden der Rippen und den Negativformen im Formkern, dass die Laschen 4 mit den Rippen 5 radial auswärts gedrückt werden, wobei die Laschen jeweils um ihre als Gelenk wirkende vordere Verbindung mit dem Hülsenkörper auswärts schwenken, so dass das Entformen problemlos erfolgen kann.

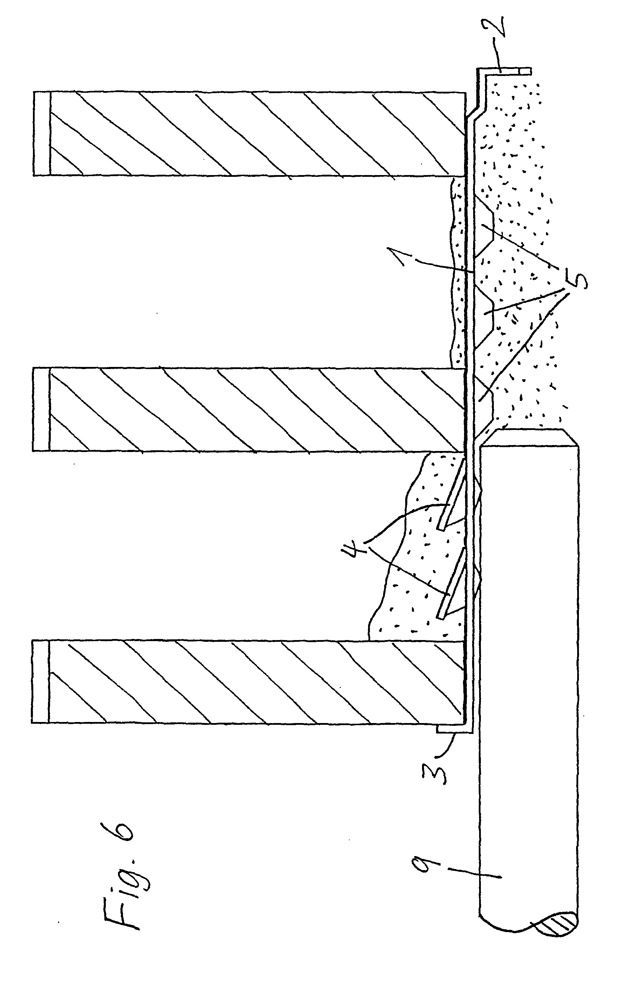

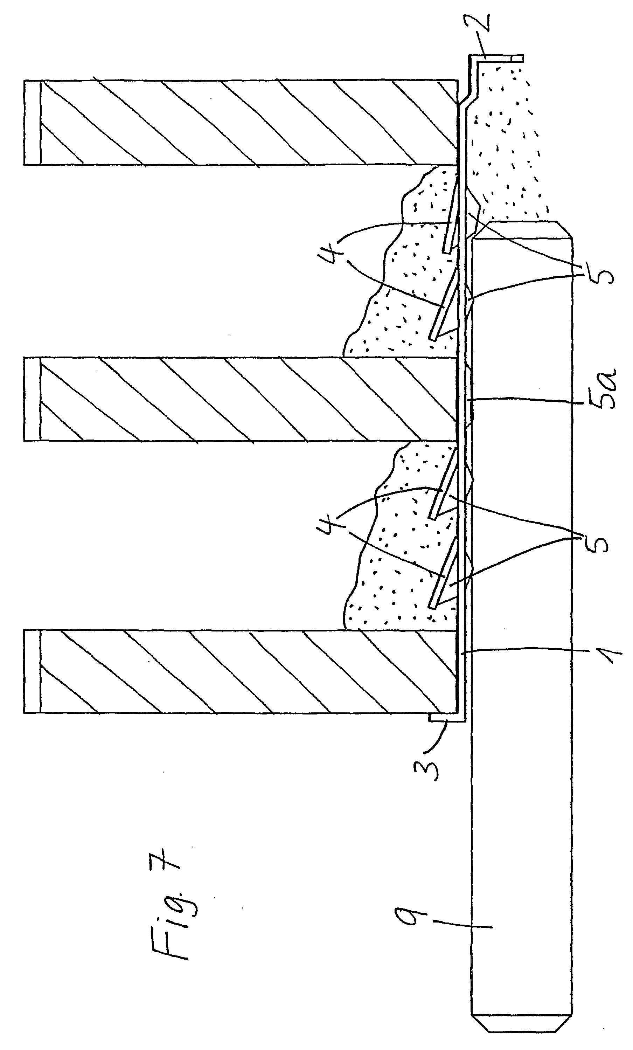

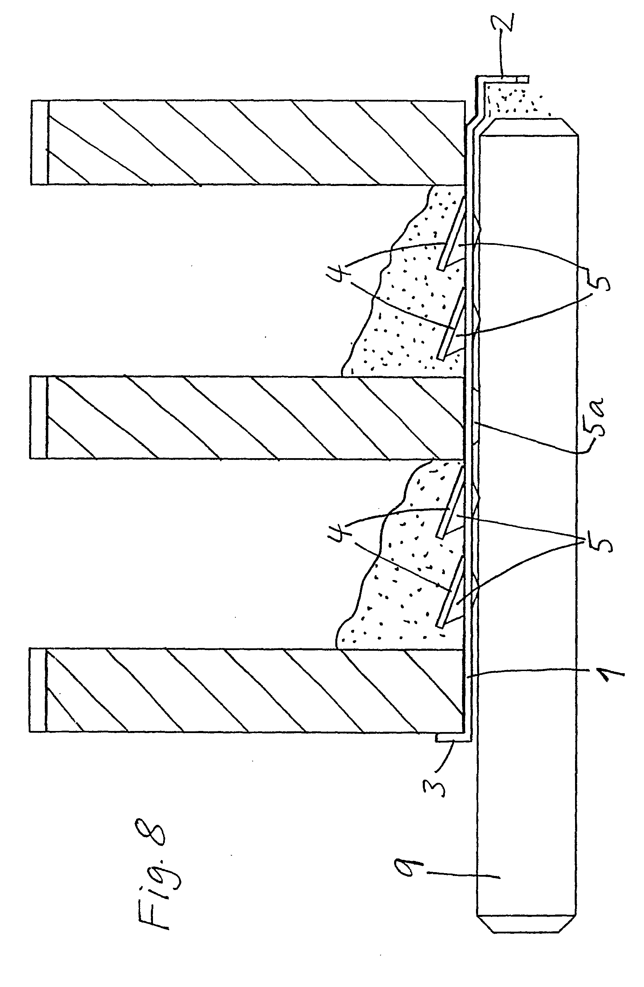

Die Figuren 6 bis 8 zeigen, wie nach dem Einsetzen der Dübelhülse in ein Dübelloch beim Einsetzen eines Ankerbolzens 9 die Laschen 2 dort, wo Hohlräume in der Wand, also in Lochsteinen oder dergleichen vorhanden sind, zuverlässig nach außen gespreizt werden, wobei wieder die Rippen 5 ihre Wirkung entfalten. Die Figuren 6 bis 8 zeigen dabei den Funktionsablauf beim Einsetzen des Ankerbolzens 9 in drei Phasen.

Sofern die Laschen 2 nach dem Einsetzen der Dübelhülse in das Dübelloch und dem Einpressen des Injektionsmörtels 10 nicht ohnehin schon radial aufgespreizt sind oder sich durch Rückfederung nach dem Einpressen den Injektionsmörtels wieder ganz oder teilweise geschlossen haben, bewirkt das Einführen des Ankerbolzens das zwangsweise Ausspreizen der Laschen, wobei das vordere Ende des Ankerbolzens 9 mit den als Keilflächen wirkenden hinteren Abschrägungen 8 der Rippen 5 zusammenwirkt und so die Laschen nach außen drückt und an einem Zurückfedern hindert. Die Laschen 2 bleiben also nach dem Einsetzen des Ankerbolzens zwangsweise ausgespreizt, während der Injektionsmörtel abbindet.

Wo eine Lasche am Auslenken dadurch gehindert wird, dass sie mit ihrer Außenfläche an der Dübelbohrungswand anstößt, wird beim Einsetzen des Ankerbolzens die entsprechende Rippe 5 gequetscht, wie bei 5 a dargestellt ist, so dass sich dort eine straffe Radialverspannung zwischen Bohrlochwand und Ankerbolzen ergibt.

Aus den Figuren 6 bis 8 ist auch ersichtlich, wie der Injektionsmörtel 10 durch die düsenartige Leitwirkung der aufgeklappten Laschen 2 zielgerichtet Formschlußverbindungen 10a im Lochstein erzeugt.

Es versteht sich, dass statt der Rippen 5 grundsätzlich auch andere, zumindest im wesentlichen gleichwirkende Radial einwärts ragende Vorsprünge möglich sind, wie beispielsweise halbkugelförmige Noppen ausreichender Höhe. Solche Ersatzelemente sind zwar hinsichtlich der Entformungs- und Auslenkfunktion der Laschen gleichwirkend, aber die beschriebenen achsparallelen Rippen sind im Hinblick auf ihre Strömungsleiteigenschaften und die geringe Fließbehinderung für den Injektionsmörtel am günstigsten.

## Patentansprüche

1. Kunststoff-Injektionsdübelhülse, deren Hülsenkörper eine etwa zylindrische Hülsenwand, ein im wesentlichen geschlossenes vorderes Ende (2) und ein das Einführen eines Ankerbolzens (9) oder dgl. ermöglichendes hinteres Ende aufweist, wobei die Hülsenwand eine Mehrzahl von Öffnungen aufweist, **dadurch gekennzeichnet, dass** mindestens einige der Öffnungen in der Hülsenwand durch mit dieser einstückig ausgebildete Laschen (4) im wesentlichen oder teilweise verschlossen sind, die mit ihrem vorderen, dem geschlossenen Ende (2) des Hülsenkörpers zugewandten Ende über eine als Gelenk dienende einstückige Verbindung mit der übrigen Hülsenwand verbunden sind und an ihrer Innenseite jeweils eine radial einwärts in den Hohlraum (6) der Dübelhülse vorspringenden Rippe (5) ausgebildet sind, die parallel zur Hülsenkörperachse verläuft und sowohl an ihrem vorderen als auch an ihrem hinteren Ende mit einer Rampenfläche (7, 8) ausgebildet ist.

2. Dübelhülse nach Anspruch 1, wobei die mit den Laschen (4) versehenen Öffnungen der Hülsenwand und die Laschen selbst jeweils eine in Richtung der Hülsenkörperachse längliche Rechteckform haben.

3. Dübelhülse nach Anspruch 1 oder 2, **dadurch gekennzeichnet, dass** am Hülsenkörperumfang mehrere in Richtung der Hülsenkörperachse verlaufende Reihen von Öffnungen mit Laschen (4), die Innenseitig vorspringende Rippen (5) aufweisen, gebildet sind.

4. Dübelhülse nach Anspruch 3, **dadurch gekennzeichnet, dass** die Öffnungen und die Laschen (4) mit Rippen (5) in umfangsmäßig benachbarten Reihen axial versetzt bzw. gestaffelt zueinander angeordnet sind.

## Claims

1. Plastic injection dowel sleeve, the sleeve body of which has an approximately cylindrical sleeve wall, a substantially closed front end (2) and a rear end allowing the insertion of an anchor bolt (9) or similar, where the sleeve wall has a multiplicity of orifices, **characterised in that** at least some of the orifices in the sleeve wall are substantially or partly closed by tabs (4) formed of one piece therewith, which tabs by their front end facing the closed end (2) of the sleeve body are connected with the remainder of the sleeve wall by way of a one-piece connection serving as a hinge, and on the inside of each tab is formed a rib (5) which protrudes radially inwards into the cavity (6) of the dowel sleeve and runs parallel to the sleeve body axis and has a ramp surface (7, 8) at both its front and its rear end.

2. Dowel sleeve according to claim 1, where the orifices of the sleeve wall which are fitted with tabs (4), and the tabs themselves, each have a rectangular form extending linear in the direction of the sleeve body axis.

3. Dowel sleeve according to claim 1 or 2, **characterised in that** on the sleeve body periphery are formed several rows of orifices running in the direction of the sleeve body axis with tabs (4) which have ribs (5) protruding on the inside.

4. Dowel sleeve according to claim 3, **characterised in that** the orifices and the tabs (4) with ribs (5) in peripherally adjacent rows are arranged axially offset or staggered in relation to each other.

## Revendications

1. Douille de cheville à scellement par injection en matière plastique, dont le corps de douille présente une paroi de douille sensiblement cylindrique, une extrémité antérieure (2) essentiellement fermée et une extrémité postérieure qui permet l'insertion d'un boulon d'ancrage (9) ou similaire, la paroi de douille présentant une pluralité d'ouvertures, **caractérisée par le fait qu'**au moins quelques unes des ouvertures dans la paroi de douille sont fermées essentiellement ou partiellement par des languettes (4) formées d'une pièce avec la paroi de douille, qui sont liées par une liaison formant articulation au reste de la paroi de douille, à leur extrémité antérieure tournée vers l'extrémité fermée (2) du corps de douille, et portent chacune sur leur face intérieure une nervure (5) qui fait saillie radialement vers l'intérieur dans la cavité (6) de la douille de cheville, s'étend parallèlement à l'axe du corps de douille et présente aussi bien à son extrémité antérieure qu'à son extrémité postérieure une rampe (7, 8).

2. Douille de cheville selon la revendication 1, dans laquelle les ouvertures de la paroi de douille pourvues de languettes (4) et les languettes elles-mêmes ont une forme rectangulaire, allongée dans la direction de l'axe du corps de douille.

3. Douille de cheville selon la revendication 1 ou 2, **caractérisée par le fait qu'**il est prévu sur le pourtour du corps de douille plusieurs rangées d'ouvertures et de languettes (4) qui s'étendent et présentent des nervures (5) faisant saillie radialement vers l'intérieur.

4. Douille de cheville selon la revendication 3, **caractérisée par le fait que** les languettes (4) pourvues des nervures (5) sont disposées en des rangées voisines dans la direction périphérique mais décalées les unes par rapport aux autres dans la direction axiale.
